# EUROPEAN PATENT SPECIFICATION

(11) **EP 2 936 760 B1**
(45) Date of publication and mention of the grant of the patent: **02.08.2017**
(21) Application number: 13863974.5
(22) Date of filing: 19.12.2013
(51) Int. Cl.: G06F 13/40

(54) **DEVICES AND METHODS FOR TRANSMITTING USB TERMINATION SIGNALS OVER EXTENSION MEDIA**
VORRICHTUNGEN UND VERFAHREN ZUR ÜBERTRAGUNG VON USB-ABSCHLUSSSIGNALEN ÜBER VERLÄNGERUNGSMEDIEN
DISPOSITIFS ET PROCÉDÉS POUR TRANSMETTRE DES SIGNAUX DE TERMINAISON USB SUR DES MOYENS D'EXTENSION

(30) Priority: 20.12.2012 US 201261740133 P; 08.03.2013 US 201313791619
(43) Date of publication of application: 28.10.2015
(73) Proprietor: Icron Technologies Corporation, Burnaby, BC V5C 5T5 (CA)
(72) Inventor: TOIVANEN, Kris Steven, Vancouver, British Columbia V6Z 2S1 (CA); HUNDAL, Sukhdeep Singh, Surrey, British Columbia V3W 3S8 (CA); SCHULTZ, Thomas Aaron, Surrey, British Columbia V4N 0Z5 (CA)
(74) Representative: Gevers Patents
(86) International application number: PCT/CA2013/001059
(87) International publication number: WO 2014/094128

(56) References cited:
- WO-A1-00/49507
- CN-A- 102 509 986
- US-A1- 2007 217 436
- US-A1- 2008 071 962
- US-B1- 7 028 133
- US-B2- 7 401 120
- US-B2- 7 933 295

## Description

### BACKGROUND

USB is a peripheral interface for attaching a wide variety of computing devices, such as personal computers, digital telephone lines, monitors, modems, mice, printers, scanners, game controllers, keyboards, storage devices, and/or the like. The specifications defining USB (e.g., Intel et al., Universal Serial Bus Specification, Revision 1.0, January 1996; updated as Revision 1.1 in September 1998; further updated as Revision 2.0 in April 2000; further updated as Revision 3.0 in November 2008, and subsequent updates and modifications--hereinafter collectively referred to as the "USB Specifications", which term can include future modifications and revisions) are non-proprietary and are managed by an open industry organization known as the USB Forum. The USB Specifications establish basic criteria that must be met in order to comply with USB standards. One of ordinary skill in the art will recognize many terms herein from the USB Specifications. Those terms are used herein in a similar manner to their use in the USB Specifications, unless otherwise stated.

Under Revision 3.0 of the USB Specifications, SuperSpeed connections are provided that use a 5 Gbps signaling rate. Though the specification does not mandate any particular maximum cable length, in practical terms maintaining signal integrity requires a regular copper cable used for a SuperSpeed connection between a host device and a peripheral device typically to be at most 3 to 5 meters long to properly support the SuperSpeed connection. Therefore, a new method and apparatus are needed to optionally allow for extension of a SuperSpeed USB device to a greater distance from the host to which it is coupled, such that SuperSpeed USB packets may be propagated between the host device and the peripheral USB device. Some examples of such methods and apparatus are described in commonly owned, co-pending U.S. Patent Application Publication US2013132625. SuperSpeed data exchange between a host device and a USB device per Revision 3.0 of the USB Specification takes place over two differential pair conductors: a pair for the host to transmit to the USB device, and a pair for the host to receive from the USB device. As described in Section 6.11 of Revision 3.0 of the USB Specification, a receiver detection circuit is implemented as part of the transmitter on each side, and is configured to detect whether a load impedance equivalent to a DC impedance of the receiver termination is present or not. This detection occurs before the start of polling and before the system (host/device) transitions into state U0.

This mechanism may work correctly when the host is directly connected to the device or hub in a traditional manner (direct connection). However, in an extension environment, SuperSpeed signals may be transmitted from a Tx (transmitter) side to a Rx (receiver side) via an additional transmission medium other than the USB cable used in direct link, such as, but not limited to, Ethernet and fiber optic cable. In such an environment, the receiver detection circuit may be present between the host device and an upstream facing port device, and between the USB device and a downstream facing port device, at either end of the additional transmission medium. In such an environment, timing or other issues arise with regard to properly presenting the receiver termination to the transmitter side.

### SUMMARY

In some embodiments, an upstream facing port device (UFP device) is provided. The UFP device comprises at least one upstream facing port and a detection proxy engine. The at least one upstream facing port is coupleable to a host device or a hub device via a USB protocol. The detection proxy engine is configured to determine whether a host device or hub device coupled to the at least one upstream facing port supports SuperSpeed communication, and to selectively cause receiver termination to be presented by a downstream facing port device based on the determination of whether the host device or hub device supports SuperSpeed communication.

In some embodiments, a downstream facing port device (DFP device) is provided. The DFP device comprises at least one downstream facing port and a detection proxy engine. The downstream facing port is coupleable to a USB device via a USB protocol. The detection proxy engine is configured to determine whether a USB device coupled to the at least one downstream facing port supports SuperSpeed communication, and selectively cause receiver termination to be presented by an upstream facing port device based on the determination of whether the USB device supports SuperSpeed communication.

In some embodiments, another upstream facing port device (UFP device) is provided. The UFP device comprises at least one upstream facing port and a detection proxy engine. The at least one upstream facing port is coupleable to a host device or a hub device via a USB protocol. The detection proxy engine is configured to establish a USB communication channel with a host device or a hub device coupled to the at least one upstream facing port, and to hold the USB communication channel with the host device or hub device in a logically disconnected state until a signal is received indicating whether a USB device connected to a downstream facing port device supports SuperSpeed communication.

In some embodiments, another downstream facing port device (DFP device) is provided. The DFP device comprises at least one downstream facing port and a detection proxy engine. The downstream facing port is coupleable to a USB device via a USB protocol. The detection proxy engine is configured to establish a USB communication channel with a USB device coupled to the at least one downstream facing port, and to hold the USB communication channel with the USB device in a logically disconnected state until a signal is received indicating whether a host device or a hub device connected to an upstream facing port device supports SuperSpeed communication.

In some embodiments, a method of establishing USB communication between a host device and a USB device connected via an upstream facing port device (UFP device) coupled to the host device and a downstream facing port device (DFP device) coupled to the USB device is provided. A USB connection between the USB device and the DFP device is established. The USB connection is held in a logically disconnected state. A communication channel between the UFP device and the DFP device is established. Switching circuitry of the DFP device is selectively enabled based on a determination of whether the host device supports SuperSpeed communication. Enabling the switching circuitry of the DFP device causes receiver termination circuitry of the DFP device to be coupled to a conductor configured for transmission of data from the USB device to the DFP device.

In some embodiments, another method of establishing USB communication between a host device and a USB device connected via an upstream facing port device (UFP device) coupled to the host device and a downstream facing port device (DFP device) coupled to the USB device is provided. A determination is made as to whether the host device supports SuperSpeed communication. A communication channel is established between the UFP device and the DFP device. A signal is transmitted by the UFP device to the DFP device indicating whether the host device supports SuperSpeed communication. Receiver termination on the DFP device is selectively enabled based on content of the signal, and receiver termination on the UFP device is selectively enabled based on whether the host device supports SuperSpeed communication at a time based on a time of the transmitting of the message to the DFP device.

### DESCRIPTION OF THE DRAWINGS

The foregoing aspects and many of the attendant advantages of embodiments of this disclosure will become more readily appreciated as the same become better understood by reference to the following detailed description, when taken in conjunction with the accompanying drawings, wherein:
FIGURE 1 is a block diagram that illustrates one embodiment of a system for extending USB communication according to various aspects of the present disclosure;
FIGURE 2 is a block diagram that illustrates further details of the upstream USB extension device and downstream USB extension device illustrated in FIGURE 1;
FIGURE 3 is a block diagram that illustrates an exemplary embodiment of a UFP device and a DFP device configured to communicate via an extension medium according to various aspects of the present disclosure;
FIGURES 4A-4D include a flowchart that illustrates an exemplary embodiment of a method of establishing a USB connection between a host device and a USB device according to various aspects of the present disclosure; and
FIGURE 5 is a block diagram that illustrates another exemplary embodiment of a UFP device and a DFP device configured to communicate via an extension medium according to various aspects of the present disclosure.

### DETAILED DESCRIPTION

Timing or other issues that arise in implementing SuperSpeed receiver detection across an extension medium may be addressed using a receiver detection proxy. A detection proxy engine may be present on one or both ends of the extension medium. The detection proxy engine selectively holds a local USB connection until a capability of the remote device or host is determined, at which point the detection proxy engine may selectively enable local receiver detection based on the capabilities of the remote host or device. Such a receiver detection proxy may enable communication between the host device and peripheral USB device to work under all conditions, including but not limited to link/cable cycling, a USB 3.0 only host, a USB 2.0 only host or device, and/or the like.

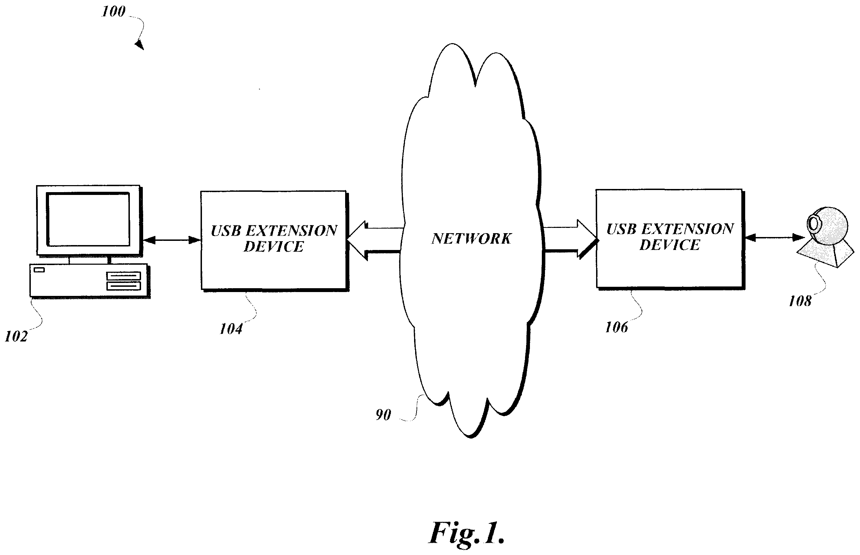

FIGURE 1 is a block diagram that illustrates one embodiment of a system 100 for extending USB communication according to various aspects of the present disclosure. The system 100 includes a host device 102 and a USB device 108. Traditionally, the host device 102 and the USB device 108 would be directly connected via a USB cable, and would communicate directly with one another via a protocol that conforms to a USB specification, such as USB 1.0, USB 1.1, USB 2.0, or USB 3.0. As discussed above, once the host device 102 and USB device 108 are separated by a non-USB communication medium, timing issues may arise with regard to presenting receiver termination to the host device 102 and/or the USB device 108.

The host device 102 may be any type of computing device containing a USB host controller. Some examples of suitable host devices 102 may include, but are not limited to, a desktop computer, a laptop computer, a tablet computing device, a server computer, a set-top box, an audio head unit for an automobile, an embedded host, and/or the like. Likewise, the USB device 108 may be any type of device capable of communicating via a USB protocol with a USB host controller. The example illustrated in FIGURE 1 is a webcam, but some other examples of suitable USB devices 108 may include, but are not limited to, a human interface device such as a keyboard or mouse, a mass storage device such as a flash drive or external hard drive, a USB-capable medical device, a printer, a USB hub, a wireless controller, and/or the like.

In the present system 100, the host device 102 is connected via a USB protocol to an upstream USB extension device 104, and the USB device 108 is connected via a USB protocol to a downstream USB extension device 106. The upstream USB extension device 104 and the downstream USB extension device 106 are communicatively coupled via a network 90 that may increase the distance between the host 102 and the USB device 108 beyond that supported by the USB specification. The network 90 and communication thereon may include any suitable networking technology, such as Ethernet, Bluetooth, WiFi, WiMax, the Internet, serial communication, and/or the like, and any suitable communication medium, such as via physical cables, via wireless spectrum, via fiber-optic cable, and/or the like. In some embodiments, the upstream USB extension device 104 and the downstream USB extension device 106 may happen to be closer to each other than the short USB requirement distance, and/or may be directly connected by a cable instead of via a network 90.

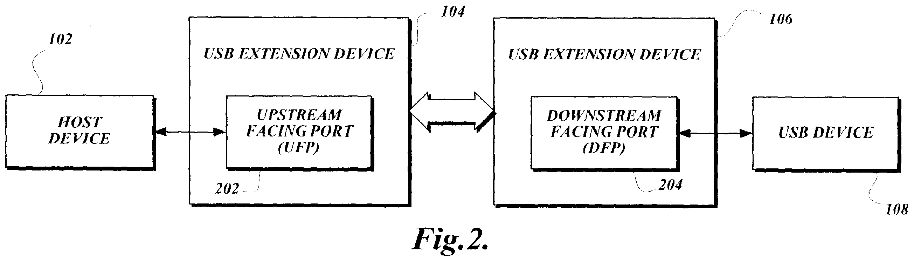

FIGURE 2 is a block diagram that illustrates further details of the upstream USB extension device 104 and downstream USB extension device 106 illustrated in FIGURE 1. The upstream USB extension device 104 includes an upstream facing port 202, and the downstream USB extension device 106 includes a downstream facing port 204. As used herein, the terms "upstream facing port" and the corresponding acronym "UFP" may be used interchangeably, as may the terms "downstream facing port" and the corresponding acronym "DFP." Likewise, the upstream USB extension device 104 is interchangeably described as an upstream facing port device or UFP device, and the downstream USB extension device 106 is interchangeably described as a downstream facing port device or DFP device. The UFP 202 is configured at least to communicate with the host device 102 via a USB-standard-compliant protocol, and to exchange USB bus traffic and other signals with the DFP 204. The DFP 204 is configured at least to communicate with the device 108 via a USB-standard-compliant protocol, and to exchange messages and USB bus traffic with the UFP 202. The upstream USB extension device 104 and the downstream USB extension device 106 may contain further components such as a power supply, a status LED, a loudspeaker, an input device for switching between UFP functionality and DFP functionality, and/or the like. Since such components and their functions are familiar to those of ordinary skill in the art, they have not been discussed further herein.

As illustrated in FIGURE 2, the upstream facing port 202 of the upstream USB extension device 104 is connected to a downstream facing port of a host device 102, and the downstream facing port 204 of the downstream USB extension device 106 is connected to an upstream facing port of a USB device 108. In other embodiments, the upstream facing port 202 of the upstream USB extension device 104 may be connected to a downstream facing port other than one provided by a host device 102, such as a downstream facing port of a hub and/or the like. Likewise, in other embodiments, the downstream facing port 204 of the downstream USB extension device 106 may be connected to an upstream facing port other than one provided by a USB device 108, such as an upstream facing port of a hub and/or the like. The discussion below is primarily in terms of the simple topology illustrated in FIGURE 2, but one of ordinary skill in the art will recognize that in some embodiments similar techniques may be used in other topologies without departing from the scope of the present disclosure.

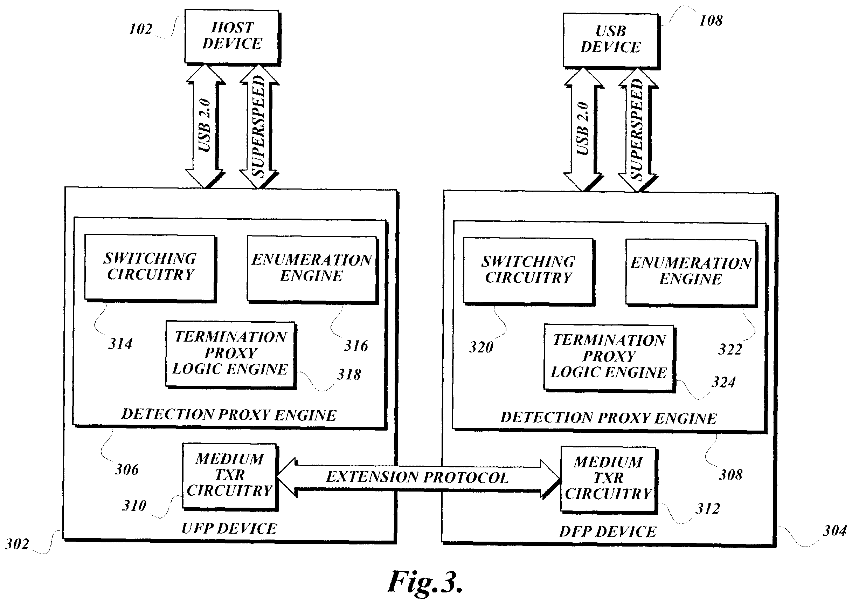

FIGURE 3 is a block diagram that illustrates an exemplary embodiment of a UFP device and a DFP device configured to communicate via an extension medium according to various aspects of the present disclosure. As illustrated, a host device 102 is coupled to the UFP device 302 via a USB 3.0 connection. As understood by one of ordinary skill in the art, the USB 3.0 connection includes a USB 2.0 bus and a SuperSpeed bus. The host device 102 may communicate with the UFP device 302 via low speed, full speed, or high speed via the USB 2.0 bus, and may communicate at higher speeds via the SuperSpeed bus (as described in the USB Specifications). An illustrated USB device 108 is coupled to the DFP device 304 via a similar USB 3.0 connection. Though USB 3.0 connections are illustrated in FIGURE 3, in an actual embodiment, one or both of the host device 102 and the USB device 108 may be coupled to the UFP device 302 or the DFP device 304 via only a USB 1.0, 1.1, or 2.0 connection.

The UFP device 302 and the DFP device 304 each include extension medium transceiver circuitry 310, 312. The extension medium transceiver circuitry 310, 312 is configured to establish a connection between the UFP device 302 and the DFP device 304 via an extension medium such as Ethernet, fiber optic cable, and/or any other suitable medium, as described above. The extension medium transceiver circuitry 310 of the UFP device 302 receives information transmitted by the host device 102 in a USB format, converts the information to a format and protocol suitable for transmission over the extension medium, and transmits the information to the DFP device 304. The extension medium transceiver circuitry 312 of the DFP device 304 receives the information from the UFP device 302, converts the information to a USB format, and transmits the USB-formatted information to the USB device 108. A similar process happens in reverse for USB-formatted information transmitted by the USB device 108 to the host device 102 via the DFP device 304 and the UFP device 302. Any suitable technique may be used by the extension medium transceiver circuitry 310, 312 to translate and exchange the USB-formatted information, including but not limited to the techniques disclosed in commonly owned U.S. Patent No. 6,381, 666. Though not explicitly illustrated, the UFP device 302 and the DFP device 304 include circuitry for establishing an electrical connection to the host device 102 and USB device 108, respectively. This circuitry is configured to establish an electrical connection substantially in accordance with the USB Specifications, such that the host device 102 and the USB device 108 behave as if they are connected directly to a USB-compliant device. With respect to SuperSpeed connections, the circuitry includes receiver termination circuitry, as described in Section 6.8.3, "Receiver Electrical Parameters," of the USB 3.0 Specification. The receiver termination circuitry on the UFP device 302 allows receiver detection circuitry at the host device 102 (as described in Section 6.11, "Receiver Detection," of the USB 3.0 Specification) to detect that a SuperSpeed electrical connection has been made to the UFP device 302, and the receiver termination circuitry on the DFP device 304 allows receiver detection circuitry at the USB device 108 to detect that a SuperSpeed electrical connection has been made to the DFP device 304.

Because the UFP device 302 and DFP device 304 are meant to allow the host device 102 and USB device 108 to communicate as if they were connected to each other via standard USB connections, the receiver termination circuitry on the UFP device 302 should reflect the termination state of the USB device 108, and the receiver termination circuitry on the DFP device 304 should reflect the termination state of the host device 102. If one of the host device 102 or the USB device 108 does not support SuperSpeed connections, the receiver termination circuitry on the other side of the extension medium should indicate that this is the case. Even in cases where the host device 102 and USB device 108 both support SuperSpeed connections, if receiver termination circuitry is enabled at the UFP device 302 or the DFP device 304 at all times, then the host device 102 and USB device 108 could detect the presence of the SuperSpeed connection to the UFP device 302 and DFP device 304, respectively, as soon as the electrical connection was established by plugging in an associated connector. In many circumstances, this would be problematic, as a connection may not yet be established between the UFP device 302 and the DFP device 304. In such a case, the USB device 108 may expect input via the SuperSpeed connection which the DFP device 304 is not yet ready to provide, and may become stuck in an undesired state. In other cases, the host device 102 may not support SuperSpeed communication, in which case presenting receiver termination by the DFP device 304 would cause the USB device 108 to be incorrectly configured, and vice versa. If a SuperSpeed connection is not available, the host device 102 and the USB device 108 may still communicate via a low speed, full speed, or high speed protocol over the USB 2.0 data connections, but might not do so if receiver termination is inappropriately presented by the UFP device 302 or the DFP device 304.

To address these and other problems, the UFP device 302 and DFP device 304 each include a detection proxy engine 306, 308. The detection proxy engines 306, 308 include switching circuitry 314, 320, an enumeration engine 316, 322, and a termination proxy logic engine 318. The switching circuitry 314 and switching circuitry 320 are configurable to selectively connect or disconnect the receiver termination circuitry from the SuperSpeed conductors provided to the host device 102 and the USB device 108. In an enabled state, the switching circuitry 314, 320 connects the receiver termination circuitry to the respective SuperSpeed conductor, while in a disabled state, the switching circuitry 314, 320 disconnects the receiver termination circuitry from the respective SuperSpeed conductor. The enumeration engines 316, 322 are configured to determine whether the host device 102 and USB device 108, respectively, support SuperSpeed communication. The termination proxy logic engines 318, 324 are configured to control the switching circuitry 314, 320 and the enumeration engines 316, 322, in order to present receiver termination to the host device 102 and USB device 108 at appropriate times, as described further below.

In general, the word "engine" as used herein, refers to logic embodied in hardware or software instructions, which can be written in a programming language, such as C, C++, COBOL, JAVA™, PHP, Perl, HTML, CSS, JavaScript, VBScript, ASPX, Microsoft .NET™ languages such as C#, and/or the like. An engine may be compiled into executable programs, written in interpreted programming languages, or embodied directly in electronic logic. Engines may be callable from other engines or from themselves. Generally, the engines described herein refer to logical modules that can be merged with other engines, or can be divided into sub-engines. The engines can be stored in any type of computer-readable medium or computer storage device and be stored on and executed by one or more general purpose computers, thus creating a special purpose computer configured to provide the engine. In some embodiments, the detection proxy engines 306, 308 and/or the extension medium transceiver circuitry 310, 312 may be implemented within one or more logic devices such as PLDs, ASICs, FPGAs, and/or the like. In other embodiments, the detection proxy engines 306, 308 may be implemented within a computing device having at least one processor and a memory containing computer executable instructions that, if executed by the at least one processor, cause the detection proxy engine 306, 308 to perform the actions discussed below; a dedicated digital hardware device implemented, for example, as a state machine configured to perform the actions described; within an application specific processor; and/or within any other suitable computing device. In some embodiments, the detection proxy engines 306, 308 may be built into USB-compatible hub circuitry included within the UFP device 302 and/or the DFP device 304. In some embodiments, USB-compatible hub circuitry may be built into the detection proxy engines 306, 308.

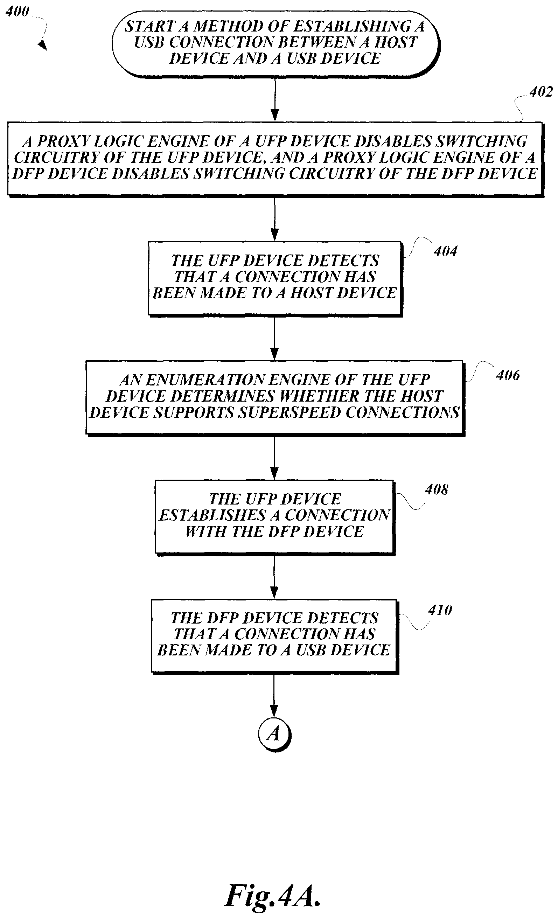

FIGURES 4A-4D include a flowchart that illustrates an exemplary embodiment of a method of establishing a USB connection between a host device 102 and a USB device 108, according to various aspects of the present disclosure. As illustrated and described, the method 400 relates to establishing a USB connection between a host device 102 coupled to a UFP device 302, and a USB device 108 connected to a DFP device 304. However, one of ordinary skill in the art will recognize that a similar method may be used to establish a USB connection between a host device 102 and a hub, between a hub and a USB device 108, between two hubs, or within any other USB topology.

From a start block, the method 400 proceeds to block 402, where a termination proxy logic engine 318 of a UFP device 302 disables switching circuitry 314 of the UFP device 302, and a termination proxy logic engine 324 of a DFP device 304 disables switching circuitry 320 of the DFP device 304. Disabling of the switching circuitry 314, 320 will cause the host device 102 to not detect the UFP device 302 as a receiver, and will cause the USB device 108 to not detect the DFP device 304 as a receiver, even if the appropriate electrical connections between the host device 102 and the UFP device 302 or between the USB device 108 and the DFP device 304 are made.

It is assumed herein that, as of block 402, the host device 102 and the USB device 108 are either not yet electrically coupled to the UFP device 302 and the DFP device 304, are not powered on, or are otherwise not communicatively active. In other embodiments, one or both of the host device 102 and the USB device 108 may be previously communicatively active and/or communicatively coupled to the UFP device 302 and/or the DFP device 304, and the actions described in block 402 may cause the host device 102 and USB device 108 to behave as if they have been disconnected from the SuperSpeed connection. In still other embodiments, the actions described in block 402 may be performed after detecting a warm reset, a hot reset, or some other disconnection or reconnection of one or both of the SuperSpeed connections.

At block 404, the UFP device 302 detects that a connection has been made to a host device 102. In some embodiments, the UFP device 302 may detect the connection to the host device 102 upon receiving a V_{BUS} signal from the host device 102, as defined in the USB Specifications. The method 400 proceeds to block 406, where an enumeration engine 316 of the UFP device 302 determines whether the host device 102 supports SuperSpeed connections. In some embodiments, the UFP device 302 may utilize receiver detection on a differential pair conductor of the SuperSpeed connection, wherein the differential pair conductor is intended for the transmission of data from the UFP device 302 to the host device 102. This is similar to the receiver detection discussed above for the host device 102 to detect the UFP device 302, but the termination circuitry is present on the host device 102 and the receiver detection circuitry is present on the UFP device 302.

At block 408, the UFP device 302 establishes a connection with the DFP device 304 via an extension medium. In some embodiments, establishing a connection between the UFP device 302 and the DFP device 304 may include performing a suitable extension protocol handshake between the UFP device 302 and the DFP device 304. In other embodiments, establishing a connection between the UFP device 302 and the DFP device 304 may simply involve detection of a signal transmitted between the UFP device 302 and the DFP device 304. At block 410, the DFP device 304 detects that a connection has been made to a USB device 108. Similar to the connection between the UFP device 302 and the host device 102, the DFP device 302 may detect the connection to the USB device 108 upon receiving a V_{BUS} signal from the USB device 108. In some embodiments, the UFP device 302 and/or the DFP device 304 may establish a connection to the host device 102 or the USB device 108 and may place that connection in a hold state until the connection between the UFP device 302 and the DFP device 304 is established. For example, the UFP device 302 may establish an electrical connection to the host device 102, but may place the connection in a hold state by continuing to leave the switching circuitry 314 disabled. In other embodiments, the UFP device 302 and the DFP device 304 may establish a mutual connection before detecting a connection from one or both of the host device 102 and the USB device 108. Likewise, the UFP device 302 and the DFP device 304 may detect connections to the host device 102 and USB device 108 at the same time, or in the opposite order as illustrated in FIGURE 4A, without departing from the scope of the present disclosure. The method 400 then proceeds to a continuation terminal ("terminal A").

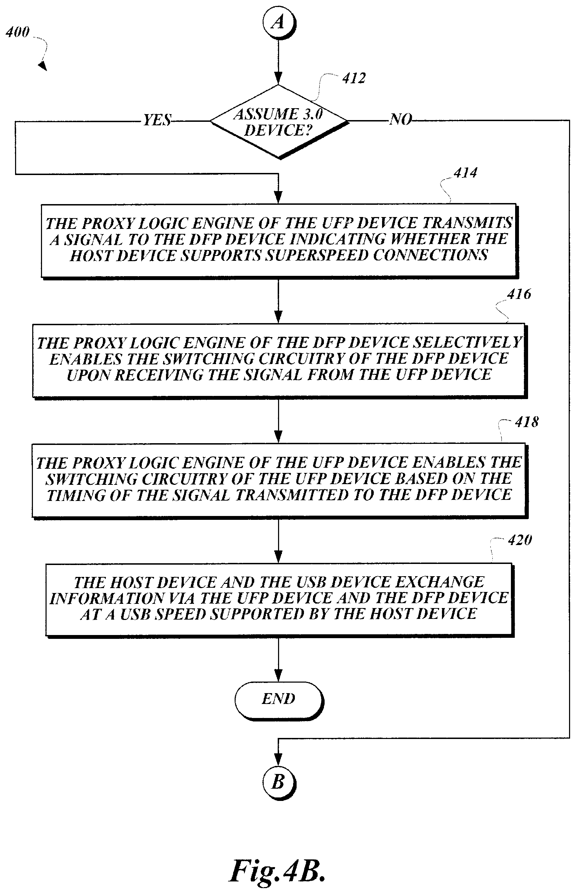

From terminal A (FIGURE 4B), the method 400 proceeds to block 412, where a determination is made as to whether the UFP device 302 is to assume that the USB device 108 supports SuperSpeed connections. In some embodiments, the UFP device 302 may be configurable to either assume that the USB device 108 supports SuperSpeed connections, or to not make such an assumption and instead to perform actions to determine whether the USB device 108 supports such connections. In some embodiments, the UFP device 302 may support one path or the other, but not both. If the UFP device 302 is configured to assume that the USB device 108 supports SuperSpeed connections, the result of the determination in block 412 is YES, and the method 400 proceeds to block 414. Otherwise, the result of the determination in block 412 is NO, and the method 400 proceeds to another continuation terminal ("terminal B").

At block 414, the termination proxy logic engine 318 of the UFP device 302 transmits a signal to the DFP device 304 indicating whether the host device 102 supports SuperSpeed connections. In some embodiments, the signal may include a packet or command of an extension protocol used by the UFP device 302 and the DFP device 304 for exchanging data and commands. In some embodiments, the signal may be a simple electrical or optical signal transmitted over the extension medium, or any other suitable signal for indicating whether the host device 102 supports SuperSpeed connections.

At block 416, the termination proxy logic engine 324 of the DFP device 304 selectively enables the switching circuitry 320 of the DFP device 304 upon receiving the signal from the UFP device 302, thereby indicating to the USB device 108 whether it is connected to a host device 102 that supports SuperSpeed communication. If the signal received from the UFP device 302 indicated that the host device 102 does not support SuperSpeed communication, the switching circuitry 320 is not enabled.

As stated above, the present logical path assumes that the USB device 108 supports SuperSpeed communication. Accordingly, the termination proxy logic engine 318 of the UFP device 302 does not wait for an indication from the DFP device 304 that the USB device 108 supports SuperSpeed connections. Instead, at block 418, the termination proxy logic engine 318 of the UFP device 302 enables the switching circuitry 314 of the UFP device 302 based on the timing of the signal transmitted to the DFP device 304. If the host device 102 does not support SuperSpeed connections, this value may be ignored by the host device 102.

In some embodiments, the enabling of the switching circuitry 314 may be based on an expected time at which the DFP device 304 will enable its switching circuitry 320. The termination proxy logic engine 318 may base the expected time on an expected a signal transmission latency, a predetermined delay, and/or any other suitable information, such that the switching circuitry 314 of the UFP device 302 and the switching circuitry 320 of the DFP device 304 are enabled at substantially the same time.

One of ordinary skill in the art will recognize that the actions described with relation to block 418 also assume that the USB device 108 is connected to the DFP device 304. In some embodiments, the termination proxy logic engine 318 of the UFP device 302 may not enable the switching circuitry 314 unless it receives an indication that the USB device 108 is connected to the DFP device 304. In some embodiments, the termination proxy logic engine 318 may enable the switching circuitry 314 whether or not the USB device 108 is connected to the DFP device 304, and will allow the host device 102 to handle any errors that occur due to a lack of responsiveness as it normally would. Also, though the method 400 indicates that the USB device 108 is connected to the DFP device 304 before the switching circuitry 320 is activated, in some embodiments, the switching circuitry 320 may be activated by the termination proxy logic engine 324 of the DFP device 304 before the USB device 108 is connected to the DFP device 304, if the DFP device 304 is coupled to a UFP device 302 and host device 102 that supports SuperSpeed connections. In such a case, the USB device 108 would correctly detect the receiver termination at the DFP device 304 upon being connected to the DFP device 304.

Once the switching circuitry is selectively enabled, the host device 102 and the USB device 108 exchange information via the UFP device 302 and the DFP device 304 at a USB speed supported by the host device 102. Assuming the host device 102 supports SuperSpeed connections, SuperSpeed information is exchanged between the host device 102 and the USB device 108. If the host device 102 does not support SuperSpeed connections, the host device 102 and the USB device 108 may still exchange information via a low speed, a full speed, or a high speed USB protocol. In some embodiments, the host device 102 and the USB device 108 may exchange information via a low speed, a full speed, or a high speed USB protocol whether or not a SuperSpeed connection is established. The method 400 then proceeds to an end block and terminates.

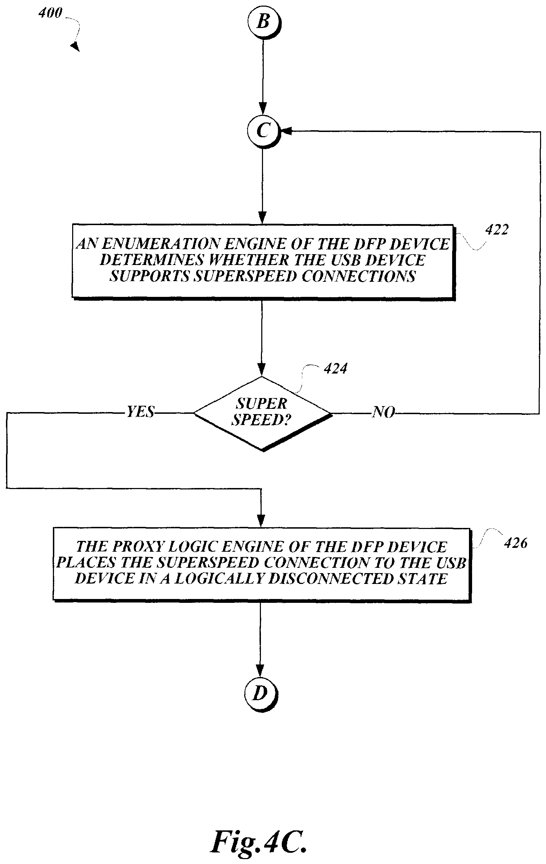

If the determination at decision block 412 (FIGURE 4A) was NO, the method 400 proceeds to terminal B. From terminal B (FIGURE 4C), the method 400 proceeds to another continuation terminal ("terminal C"), and then to block 422, where an enumeration engine 322 of the DFP device 304 determines whether the USB device 108 supports SuperSpeed connections. As discussed above with respect to the UFP device 302 determining whether the host device 102 supports SuperSpeed connections, the enumeration engine 322 may determine whether the USB device 108 supports SuperSpeed connections by checking for a termination circuit at the USB device 108 on a conductive pair configured to transmit SuperSpeed data from the DFP device 304 to the USB device 108. At decision block 424, a determination is made based on whether or not the USB device 108 supports SuperSpeed connections. If the answer to the determination at decision block 424 is NO, the method 400 returns to terminal C to check again whether the USB device 108, or future USB devices coupled to the DFP device 304, support SuperSpeed connections. Though as illustrated this portion of the method 400 may continue to loop one or more times in attempting to establish a SuperSpeed connection, the USB device 108 may nevertheless establish a low speed, full speed, or high speed USB connection to the host device 102 via the USB 2.0 connection even if establishing a SuperSpeed connection is not possible. In other embodiments, the method 400 may proceed to terminal D regardless of whether the USB device 108 supports SuperSpeed connections.

If the answer to the determination at decision block 424 is YES, the method 400 proceeds to block 426, where the termination proxy logic engine 324 of the DFP device 304 places the SuperSpeed connection to the USB device 108 in a logically disconnected state. In some embodiments, placing the SuperSpeed connection in the logically disconnected state may include leaving the switching circuitry 320 disabled such that receiver termination is not presented to the USB device 108. Such a "logically disconnected state" may be the Rx.Detect state illustrated in Figure 7-13 of the USB 3.0 Specification. The Rx.Detect state is one example of a logically disconnected state, but in other embodiments, other logically disconnected states may be used instead, such as the SS.Inactive state, the SS.Disabled state, or any other suitable state.

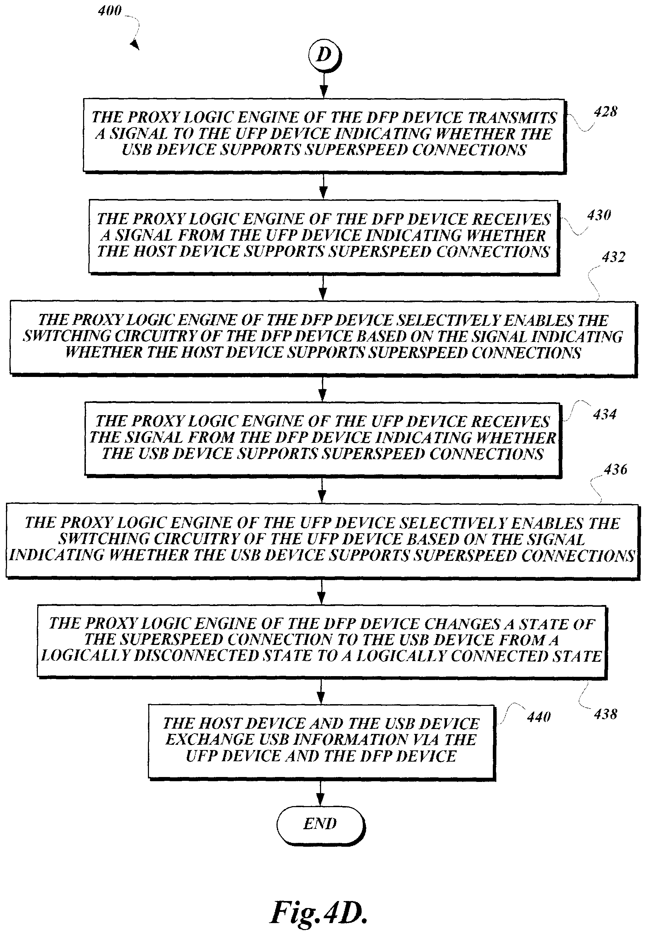

The method 400 then proceeds to a continuation terminal ("terminal D"). From terminal D (FIGURE 4D), the method 400 proceeds to block 428, where the termination proxy logic engine 324 of the DFP device 304 transmits a signal to the UFP device 302 indicating whether the USB device 108 supports SuperSpeed connections. As with the similar signals discussed above, this signal may include a packet, may be a simple electrical or optical signal, or may be any other suitable signal. At block 430, the termination proxy logic engine 324 of the DFP device 304 receives a signal from the UFP device 302 that may be similar to those discussed above that indicates whether the host device 102 supports SuperSpeed connections, and at block 432, the termination proxy logic engine 324 of the DFP device 304 selectively enables the switching circuitry 320 of the DFP device 304 based on the signal indicating whether the host device 102 supports SuperSpeed connections. Accordingly, the state of the receiver termination circuitry of the DFP device 304 reflects the receiver termination circuitry provided (or not provided) by the host device 102.

At block 434, the termination proxy logic engine 318 of the UFP device 302 receives the signal from the DFP device 304 indicating whether the USB device 108 supports SuperSpeed connections. At block 436, the termination proxy logic engine 318 of the UFP device 302 selectively enables the switching circuitry 314 of the UFP device 302 based on the signal indicating whether the USB device 108 supports SuperSpeed connections, such that the state of the receiver termination circuitry of the UFP device 302 reflects the receiver termination circuitry provided (or not provided) by the USB device 108. At block 438, the termination proxy logic engine 324 of the DFP device 304 changes a state of the SuperSpeed connection to the USB device 108, if available, from a logically disconnected state to a logically connected state. In some embodiments, the termination proxy logic engine 324 may do so by enabling the switching circuitry 320, such that receiver termination is presented to the USB device 108. This may cause the connection to transition from the Rx.Detect state to the Polling state, as illustrated in Figure 7-13 of the USB 3.0 Specification. These states are exemplary only, and in other embodiments, logically disconnected states other than Rx.Detect and/or logically connected states other than Polling may be used. In some embodiments wherein the logically disconnected state is established by disabling the switching circuitry 320, the actions described in block 438 may be omitted if they were performed instead in block 432. At block 440, the host device 102 and the USB device 108 exchange USB information via the UFP device 302 and the DFP device 304. The method 400 then proceeds to an end block and terminates.

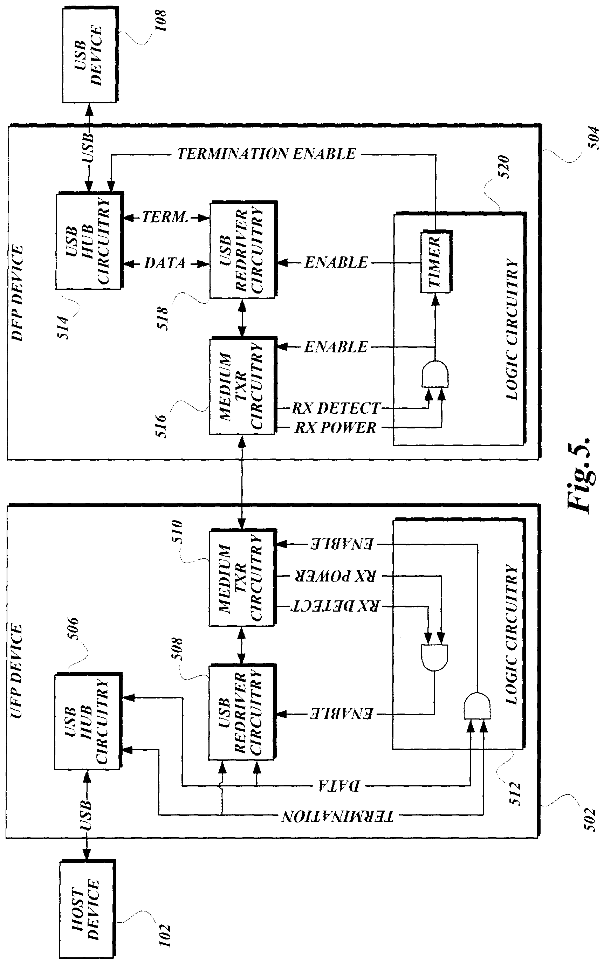

In the embodiments discussed above, the detection proxy engines 306, 308 may be implemented within one or more logic devices such as PLDs, ASICs, FPGAs, and/or the like. In other embodiments, similar functionality may be provided by using simplified logic circuitry to enable or disable off-the-shelf components. FIGURE 5 is a block diagram that illustrates another exemplary embodiment of a UFP device and a DFP device according to various aspects of the present disclosure. The UFP device 502 and the DFP device 504 each include USB hub circuitry 506, 514, USB redriver circuitry 508, 518, and medium transceiver circuitry 510, 516, respectively. The USB hub circuitry 506, 514 may include commercially available USB hubs. The USB redriver circuitry 508, 518 may include commercially available USB redrivers that can be enabled and disabled upon receipt of an electrical signal. The medium transceiver circuitry 510, 516. may be any suitable transceiver circuitry for accepting a signal from the USB redriver circuitry 508, 518, converting it to a format suitable for transmission, and transmitting it over the extension medium, and vice versa.

As shown in the diagram at the UFP device 502, the USB hub circuitry 506 outputs a USB 3.0 termination signal and a USB 3.0 data signal. These signals are provided both to the USB redriver circuitry 508 and the logic circuitry 512. When the USB redriver circuitry 508 is enabled, it provides the termination signal and data signal to the medium transceiver circuitry 510 for transmission to the DFP device 504. The medium transceiver circuitry 510 outputs a receive detect (RX Detect) signal and a receive power (RX Power) signal to the logic circuitry 512 based on whether such signals are detected over the extension medium from the DFP device 504. When the medium transceiver circuitry 510 is enabled, it converts the data signal to a format suitable for transmission and transmits it over the extension medium. The logic circuitry 512 provides enable signals to the USB redriver circuitry 508 and the medium transceiver circuitry 510.

As shown in the diagram at the DFP device 504, the medium transceiver circuitry 516 also outputs an RX Detect signal and an RX Power signal to logic circuitry 520 based on whether such signals are detected over the extension medium from the UFP device 502. The USB hub circuitry 514 outputs a USB 3.0 termination signal and a USB 3.0 data signal to the USB redriver circuitry 518. The USB redriver circuitry 518, when enabled, provides the data signal to the medium transceiver circuitry 516. The medium transceiver circuitry 516, when enabled, converts and transmits the signal from the USB redriver circuitry 518 over the extension medium.

Initially, the USB redriver circuitry 508, 518 and the medium transceiver circuitry 510, 516 are not enabled. Once the UFP device 502 is powered on and the host device 102 is connected, the USB hub circuitry 506 establishes a USB connection to the host device 102. Upon establishing the connection to the host device 102, the USB hub circuitry 506 begins transmitting the termination signal and the data signal. The USB redriver circuitry 508 receives these signals, but does not retransmit them due to the fact that it is not yet enabled. The logic circuitry 512 also receives these signals at an AND gate, and once both signals are detected, the logic circuitry 512 provides an enable signal to the medium transceiver circuitry 510.

Upon receiving the enable signal, the medium transceiver circuitry 510 begins transmitting a signal over the extension medium to the medium transceiver circuitry 516 of the DFP device 504. The medium transceiver circuitry 516 detects the signal, and begins generating the RX Detect signal. Once the signal has been detected as being of a predetermined power for a predetermined amount of time to indicate a reliable communication connection, the medium transceiver circuitry 516 begins generating the RX Power signal. The RX Detect and RX Power signals are provided to the logic circuitry 520 at an AND gate. Once both signals are detected, an enable signal is provided to the medium transceiver circuitry 516 and to a timer of the logic circuitry 520. The timer delays for an amount of time intended to compensate for a delay in subsequent steps to be performed at the UFP device 502, and then transmits the termination enable signal to the USB hub circuitry 514 and the enable signal to the USB redriver circuitry 518. The termination enable signal causes the USB hub circuitry 514 to present USB 3.0 termination to the USB device 108.

Once the medium transceiver circuitry 516 receives the enable signal, it begins transmitting a signal to the medium transceiver circuitry 510 of the UFP device 502. Once the medium transceiver circuitry 510 detects the signal and determines that the power meets one or more thresholds that indicate a stable communication link, the medium transceiver circuitry 510 provides the RX Detect and RX Power signals to the logic circuitry 512 at an AND gate. Once the logic circuitry 512 receives both signals, the logic circuitry 512 provides an enable signal to the USB redriver circuitry 508. The timing compensation at the DFP device 504 is calculated to cause termination to be presented to the USB device 108 at substantially the same time that the USB redriver circuitry 508 is enabled, and the connection between the UFP device 502 and the DFP device 504 is complete.

## Claims

1. An upstream facing port, UFP, device comprising:
at least one upstream facing port coupleable to a host device or a hub device via a USB protocol; and
a detection proxy engine configured to:
establish a USB communication channel with a host device or a hub device coupled to the at least one upstream facing port; and
hold the USB communication channel with the host device or the hub device in a logically disconnected state until a signal is received indicating whether a USB device connected to a downstream facing port, DFP, device supports SuperSpeed communication.

2. The UFP device of Claim 1, further comprising an extension media transceiver configured to:
establish a communication channel between the UFP device and the DFP device; and
receive the signal from the DFP device indicating whether the USB device supports SuperSpeed communication.

3. The UFP device of Claim 1 or 2, wherein the detection proxy engine is further configured to:
in response to receiving the signal indicating whether the USB device supports SuperSpeed communication, selectively present receiver termination to the host device or the hub device based on the signal.

4. The UFP device of any one of Claims 1 to 3, wherein the detection proxy engine includes USB hub circuitry.

5. A downstream facing port, DFP, device comprising:
at least one downstream facing port coupleable to a USB device via a USB protocol; and
a detection proxy engine configured to:
establish a USB communication channel with a USB device coupled to the at least one downstream facing port; and
hold the USB communication channel with the USB device in a logically disconnected state until a signal is received indicating whether a host device or a hub device connected to an upstream facing port, UFP, device supports SuperSpeed communication.

6. The DFP device of Claim 5, further comprising an extension media transceiver configured to:
establish a communication channel between the DFP device and the UFP device; and
receive the signal from the UFP device indicating whether the host device or hub device supports SuperSpeed communication.

7. The DFP device of Claim 5 or 6, wherein the detection proxy engine is further configured to:
in response to receiving the signal indicating whether the host device or hub device supports SuperSpeed communication, selectively present receiver termination to the USB device based on the signal.

8. The DFP device of any one of Claims 5 to 7, wherein the detection proxy engine includes a USB hub.

9. A method of establishing USB communication between a host device and a USB device connected via an upstream facing port, UFP, device coupled to the host device and a downstream facing port, DFP, device coupled to the USB device, the method comprising:
establishing a connection between the USB device and the DFP device;
holding the connection in a logically disconnected state;
establishing a communication channel between the UFP device and the DFP device; and
selectively enabling switching circuitry of the DFP device based on a determination of whether the host device supports SuperSpeed communication
wherein enabling the switching circuitry of the DFP device causes receiver termination circuitry of the DFP device to be coupled to a conductor configured for transmission of data from the USB device to the DFP device.

10. The method of Claim 9, wherein the determination of whether the host device supports SuperSpeed communication includes:
performing receiver detection on a conductor configured for transmission of data from the UFP device to the host device.

11. The method of Claim 9 or 10, further comprising:
transmitting, by the UFP device to the DFP device, a signal indicating whether the host device supports SuperSpeed communication.

12. A method of establishing USB communication between a host device and a USB device connected via an upstream facing port, UFP, device coupled to the host device and a downstream facing port, DFP, device coupled to the USB device, the method comprising:
determining whether the host device supports SuperSpeed communication;
establishing a communication channel between the UFP device and the DFP device;
transmitting, by the UFP device to the DFP device, a signal indicating whether the host device supports SuperSpeed communication;
selectively enabling receiver termination on the DFP device based on content of the signal; and
selectively enabling receiver termination on the UFP device based on whether the host device supports SuperSpeed communication at a time based on a time of the transmitting of the signal to the DFP device.

13. The method of Claim 12, wherein the determination of whether the host device supports SuperSpeed communication includes:
performing receiver detection on a conductor configured for transmission of data from the UFP device to the host device.

## Patentansprüche

1. Stromaufwärts gewandte Anschluss-, UFP-Vorrichtung, umfassend:
zumindest einen stromaufwärts gewandten Anschluss, der über ein USB-Protokoll mit einer Host-Vorrichtung oder einer Hub-Vorrichtung koppelbar ist; und
eine Proxy-Erkennungs-Engine, konfiguriert, um:
einen USB-Kommunikationskanal mit einer Host-Vorrichtung oder einer Hub-Vorrichtung einzurichten, die mit dem zumindest einen stromaufwärts gewandten Anschluss gekoppelt ist; und
den USB-Kommunikationskanal mit der Host-Vorrichtung oder der Hub-Vorrichtung in einem logisch getrennten Zustand zu halten, bis ein Signal empfangen wird, das darauf hinweist, ob eine USB-Vorrichtung, die mit einer stromabwärts gewandten Anschluss-, DFP-Vorrichtung, verbunden ist, SuperSpeed-Kommunikation unterstützt.

2. UFP-Vorrichtung nach Anspruch 1, darüber hinaus einen Erweiterungsmedien-Sendeempfänger umfassend, der konfiguriert ist, um:
einen Kommunikationskanal zwischen der UFP-Vorrichtung und der DFP-Vorrichtung einzurichten; und
das Signal von der DFP-Vorrichtung zu empfangen, das darauf hinweist, ob die USB-Vorrichtung SuperSpeed-Kommunikation unterstützt.

3. UFP-Vorrichtung nach Anspruch 1 oder 2, wobei die Proxy-Erkennungs-Engine darüber hinaus konfiguriert ist, um:
als Reaktion auf den Empfang des Signals, das darauf hinweist, ob die USB-Vorrichtung SuperSpeed-Kommunikation unterstützt, der Host-Vorrichtung oder der Hub-Vorrichtung basierend auf dem Signal selektiv einen Empfänger-Abschluss zu präsentieren.

4. UFP-Vorrichtung nach einem der Ansprüche 1 bis 3, wobei die Proxy-Erkennungs-Engine einen USB-Hub-Schaltkreis enthält.

5. Stromabwärts gewandte Anschluss-, DFP-Vorrichtung, umfassend:
zumindest einen stromabwärts gewandten Anschluss, der über ein USB-Protokoll mit einer USB-Vorrichtung koppelbar ist; und
eine Proxy-Erkennungs-Engine, konfiguriert, um:
einen USB-Kommunikationskanal mit einer USB-Vorrichtung einzurichten, die mit dem zumindest einen stromabwärts gewandten Anschluss gekoppelt ist; und
den USB-Kommunikationskanal mit der USB-Vorrichtung in einem logisch getrennten Zustand zu halten, bis ein Signal empfangen wird, das darauf hinweist, ob eine Host-Vorrichtung oder eine Hub-Vorrichtung, die mit einer stromaufwärts gewandten Anschluss-, UFP-Vorrichtung verbunden ist, SuperSpeed-Kommunikation unterstützt.

6. DFP-Vorrichtung nach Anspruch 5, darüber hinaus einen Erweiterungsmedien-Sendeempfänger umfassend, der konfiguriert ist, um:
einen Kommunikationskanal zwischen der DFP-Vorrichtung und der UFP-Vorrichtung einzurichten; und
das Signal von der UFP-Vorrichtung zu empfangen, das darauf hinweist, ob die Host-Vorrichtung oder die Hub-Vorrichtung SuperSpeed-Kommunikation unterstützt.

7. DFP-Vorrichtung nach Anspruch 5 oder 6, wobei die Proxy-Erkennungs-Engine darüber hinaus konfiguriert ist, um:
als Reaktion auf den Empfang des Signals, das darauf hinweist, ob die Host-Vorrichtung oder die Hub-Vorrichtung SuperSpeed-Kommunikation unterstützt, der USB-Vorrichtung basierend auf dem Signal selektiv einen Empfänger-Abschluss zu präsentieren.

8. DFP-Vorrichtung nach einem der Ansprüche 5 bis 7, wobei die Proxy-Erkennungs-Engine einen USB-Hub enthält.

9. Verfahren zur Einrichtung einer USB-Kommunikation zwischen einer Host-Vorrichtung und einer USB-Vorrichtung, die über eine stromaufwärts gewandte Anschluss-, UFP-Vorrichtung, mit der Host-Vorrichtung gekoppelt ist, und einer stromabwärts gewandten Anschluss-, DFP-Vorrichtung, die mit der USB-Vorrichtung gekoppelt ist, wobei das Verfahren umfasst:
Einrichtung einer Verbindung zwischen der USB-Vorrichtung und der DFP-Vorrichtung;
Halten der Verbindung in einem logisch getrennten Zustand;
Einrichtung eines Kommunikationskanals zwischen der UFP-Vorrichtung und der DFP-Vorrichtung;
und
Selektive Aktivierung eines Umschaltkreises der DFP-Vorrichtung basierend auf einer Bestimmung, ob die Host-Vorrichtung SuperSpeed-Kommunikation unterstützt wobei die Aktivierung eines Umschaltkreises der DFP-Vorrichtung den Empfänger-Abschlussschaltungskomplex der DFP-Vorrichtung dazu veranlasst mit einem Leiter gekoppelt zu werden, der zur Übertragung von Daten von der USB-Vorrichtung zur DFP-Vorrichtung konfiguriert ist.

10. Verfahren nach Anspruch 9, wobei die Bestimmung, ob die Host-Vorrichtung SuperSpeed-Kommunikation unterstützt enthält:
Durchführen einer Empfängererfassung auf einem Leiter, der zur Übertragung von Daten von der UFP-Vorrichtung zur Host-Vorrichtung konfiguriert ist.

11. Verfahren nach Anspruch 9 oder 10, darüber hinaus umfassend:
Übertragen, durch die UFP-Vorrichtung zur DFP-Vorrichtung, eines Signals, das darauf hinweist, ob die Host-Vorrichtung SuperSpeed-Kommunikation unterstützt.

12. Verfahren zur Einrichtung einer USB-Kommunikation zwischen einer Host-Vorrichtung und einer USB-Vorrichtung, die über eine stromaufwärts gewandte Anschluss-, UFP-Vorrichtung mit der Host-Vorrichtung verbunden ist, und einer stromabwärts gewandten Anschluss-, DFP-Vorrichtung, die mit der USB-Vorrichtung verbunden ist, wobei das Verfahren umfasst:
Bestimmung, ob die Host-Vorrichtung SuperSpeed-Kommunikation unterstützt;
Einrichtung eines Kommunikationskanals zwischen der UFP-Vorrichtung und der DFP-Vorrichtung;
Übertragung, durch die UFP-Vorrichtung zur DFP-Vorrichtung, eines Signals, das darauf hinweist, ob die Host-Vorrichtung SuperSpeed-Kommunikation unterstützt;
Selektive Aktivierung eines Empfänger-Abschlusses an der DFP-Vorrichtung basierend auf dem Inhalt des Signals; und
Selektive Aktivierung eines Empfänger-Abschlusses an der UFP-Vorrichtung, darauf basierend, ob die Host-Vorrichtung SuperSpeed-Kommunikation zu einer Zeit basierend auf einer Zeit der Übertragung des Signals zur DFP-Vorrichtung unterstützt.

13. Verfahren nach Anspruch 12, wobei die Bestimmung, ob die Host-Vorrichtung SuperSpeed-Kommunikation unterstützt enthält:
Durchführen einer Empfängererfassung auf einem Leiter, der zur Übertragung von Daten von der UFP-Vorrichtung zur Host-Vorrichtung konfiguriert ist.

## Revendications

1. Dispositif de port orienté en amont, UFP, comprenant :
au moins un port orienté en amont pouvant être couplé à un dispositif hôte ou un dispositif concentrateur par le biais d'un protocole USB ; et
un moteur proxy de détection configuré pour :
établir un canal de communication USB avec un dispositif hôte ou un dispositif concentrateur couplé à l'au moins un port orienté en amont ; et
maintenir le canal de communication USB avec le dispositif hôte ou le dispositif concentrateur dans un état déconnecté logiquement jusqu'à ce qu'un signal soit reçu, indiquant le fait qu'un dispositif USB connecté à un dispositif de port orienté en aval, DFP, supporte une communication SuperSpeed.

2. Dispositif UFP selon la revendication 1, comprenant en outre un émetteur-récepteur média d'extension configuré pour :
établir un canal de communication entre le dispositif UFP et le dispositif DFP ; et
recevoir le signal à partir du dispositif DFP, indiquant le fait que le dispositif USB supporte une communication SuperSpeed.

3. Dispositif UFP selon la revendication 1 ou 2, dans lequel le moteur proxy de détection est configuré en outre pour :
en réponse à la réception du signal indiquant le fait que le dispositif USB supporte une communication SuperSpeed, présenter de manière sélective une terminaison d'émetteur au dispositif hôte ou au dispositif concentrateur sur la base du signal.

4. Dispositif UFP selon l'une quelconque des revendications 1 à 3, dans lequel le moteur proxy de détection comprend une circuiterie de concentrateur USB.

5. Dispositif de port orienté en aval, DFP, comprenant :
au moins un port orienté en aval pouvant être couplé à un dispositif USB par le biais d'un protocole USB ; et
un moteur proxy de détection configuré pour :
établir un canal de communication USB avec un dispositif USB couplé à l'au moins un port orienté en aval ; et
maintenir le canal de communication USB avec le dispositif USB dans un état déconnecté logiquement jusqu'à ce qu'un signal soit reçu, indiquant le fait qu'un dispositif hôte ou un dispositif concentrateur connecté à un dispositif de port orienté en amont, UFP, supporte une communication SuperSpeed.

6. Dispositif DFP selon la revendication 5, comprenant en outre un émetteur-récepteur média d'extension configuré pour :
établir un canal de communication entre le dispositif DFP et le dispositif UFP ; et
recevoir le signal à partir du dispositif UFP, indiquant le fait que le dispositif hôte ou le dispositif concentrateur supporte une communication SuperSpeed.

7. Dispositif DFP selon la revendication 5 ou 6, dans lequel le moteur proxy de détection est configuré en outre pour :
en réponse à la réception du signal indiquant le fait que le dispositif hôte ou le dispositif concentrateur supporte une communication SuperSpeed, présenter de manière sélective une terminaison de récepteur au dispositif USB sur la base du signal.

8. Dispositif DFP selon l'une quelconque des revendications 5 à 7, dans lequel le moteur proxy de détection comprend un concentrateur USB.

9. Procédé pour établir une communication USB entre un dispositif hôte et un dispositif USB connecté par le biais d'un dispositif de port orienté en amont, UFP, couplé au dispositif hôte et un dispositif de port orienté en aval, DFP, couplé au dispositif USB, le procédé comprenant :
l'établissement d'une connexion entre le dispositif USB et le dispositif DFP ;
le maintien de la connexion dans un état déconnecté logiquement ;
l'établissement d'un canal de communication entre le dispositif UFP et le dispositif DFP ; et
l'activation de manière sélective d'une circuiterie de commutation du dispositif DFP sur la base de la détermination du fait que le dispositif hôte supporte une communication SuperSpeed
dans lequel l'activation de la circuiterie de commutation du dispositif DFP amène une circuiterie de terminaison de récepteur du dispositif DFP à être couplée à un conducteur configuré pour une transmission de données du dispositif USB au dispositif DFP.

10. Procédé selon la revendication 9, dans lequel la détermination du fait que le dispositif hôte supporte une communication SuperSpeed comprend :
l'exécution d'une détection de récepteur sur un conducteur configuré pour une transmission de données du dispositif UFP au dispositif hôte.

11. Procédé selon la revendication 9 ou 10, comprenant en outre :
la transmission, par le dispositif UFP au dispositif DFP, d'un signal indiquant le fait que le dispositif hôte supporte une communication SuperSpeed.

12. Procédé pour établir une communication USB entre un dispositif hôte et un dispositif USB connecté à un dispositif de port orienté en amont, UFP, couplé au dispositif hôte et un dispositif de port orienté en aval, DFP, couplé au dispositif USB, le procédé comprenant :
la détermination du fait que le dispositif hôte supporte une communication SuperSpeed ;
l'établissement d'un canal de communication entre le dispositif UFP et le dispositif DFP ;
la transmission, par le dispositif UFP au dispositif DFP, d'un signal indiquant le fait que le dispositif hôte supporte une communication SuperSpeed ;
l'activation de manière sélective d'une terminaison de récepteur sur le dispositif DFP sur la base du contenu du signal ; et
l'activation de manière sélective d'une terminaison de récepteur sur le dispositif UFP sur la base du fait que le dispositif hôte supporte une communication SuperSpeed à un instant basé sur un temps de la transmission du signal au dispositif DFP.

13. Procédé selon la revendication 12, dans lequel la détermination du fait que le dispositif hôte supporte une communication SuperSpeed comprend :
l'exécution d'une détection de récepteur sur un conducteur configuré pour une transmission de données du dispositif UFP au dispositif hôte.
